# EUROPÄISCHE PATENTSCHRIFT

(11) **EP 1 242 167 B1**
(45) Veröffentlichungstag und Bekanntmachung des Hinweises auf die Patenterteilung: **21.07.2004**
(21) Anmeldenummer: 00993498.5
(22) Anmeldetag: 14.12.2000
(51) Int. Cl.: B01D 53/56, B01D 53/86

(54) **VORRICHTUNG UND VERFAHREN ZUR ERZEUGUNG EINES REDUKTIONSMITTEL-LUFTGEMISCHES**
DEVICE AND METHOD FOR PRODUCING A REDUCING AGENT-AIR MIXTURE
PROCEDE ET DISPOSITIF POUR PRODUIRE UN MELANGE AGENT DE REDUCTION-AIR

(30) Priorität: 22.12.1999 DE 19961947
(43) Veröffentlichungstag der Anmeldung: 25.09.2002
(73) Patentinhaber: ROBERT BOSCH GMBH, 70442 Stuttgart (DE)
(72) Erfinder: RIPPER, Wolfgang, 70327 Stuttgart (DE); POLACH, Wilhelm, 71696 Möglingen (DE); MAHR, Bernd, 73207 Plochingen (DE); FRISCH, Walter, 70435 Stuttgart (DE); HUBER, Sven, 83395 Freilassing (DE); MAYER, Hanspeter, 5421 Adnet (AT); OFFENHUBER, Michael, 5421 Adnet (AT); FOETSCHL, Markus, 5580 Unternberg (AT); HOEPFLINGER, Gerald, 5412 Puch (AT)
(86) Internationale Anmeldenummer: PCT/DE2000/004473
(87) Internationale Veröffentlichungsnummer: WO 2001/045827

(56) Entgegenhaltungen:
- EP-A- 0 337 073
- WO-A-92/02290
- DE-A- 2 627 880
- PATENT ABSTRACTS OF JAPAN vol. 1995, no. 08, 29. September 1995 (1995-09-29) & JP 07 116561 A (JUNZO OZAKI), 9. Mai 1995 (1995-05-09)

## Beschreibung

Die vorliegende Erfindung betrifft eine Vorrichtung und ein Verfahren zur Erzeugung eines Reduktionsmittel-Luftgemisches nach dem Oberbegriff des Patentanspruchs 1 bzw. dem Oberbegriff des Patentanspruchs 9. Derartige Vorrichtungen bzw. Verfahren finden Verwendung im Rahmen von Systemen zum Nachbehandeln von Brennkraftmaschinen.

Als Folge der in der letzten Jahren stets niedriger anzusetzenden Schadstoffgrenzwerte sind zahlreiche Vorrichtungen und Verfahren zur Nachbehandlung von Abgasen in Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbebhandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt. Man unterscheidet hierbei üblicherweise zwischen sogenannten SCR-Katalysatoren (engl. selective catalytic reduction) mit Harnstoffdosiersystem und Speicherkatalysatoren. Die SCR-Katalysatoren werden mittels einer Harnstoff- und/oder Ammoniakreduktionsmittelzufuhr generiert, während die Speicherkatalysatoren mit Kohlenwasserstoffen des mitgeführten Brennkraftmaschinen-Brennstoffs in sogenannten Abgasfettphasen regeneriert werden.

Aus der EP-A-0381236 ist ein System bekannt, welches zum Entfernen von Stickoxiden in Abgasen aus einem Dieselmotor Ammoniak als Reduktionsmittel zudosiert. Bei diesem System ist ferner ein Turbolader vorgesehen, welcher den Druck des Abgases senkt. Eine verwendete Harnstoff-Wasserlösung wird mittels Druckluft zudosiert.

Aus der DE-A-4441261 ist eine Einrichtung zum Nachbehandeln der Abgase einer Brennkraftmaschine bekannt, bei welcher die Leistung des Katalysators über eine Dosiereinrichtung verbessert werden soll. Die Dosiereinrichtung ist als elektromagnetisches Dosierventil ausgebildet, welches sich mit gleicher Taktfrequenz bewegt (öffnet und schließt). Die Dosiermenge wird durch das Tastverhältnis bei jedem Hub (sowie durch die Druckdifferenz) definiert. Die Zugabe des Reduktionsmittels in das Abgassystem erfolgt vorzugsweise kennfeldabhängig, d. h. in Abhängigkeit von Menge und/oder Zusammensetzung des Abgases.

Es ist beispielsweise aus der DE 42 30 056 Al bekannt, ein Aerosol auf der Grundlage eines Reduktionsmittels und dieses beaufschlagender Druckluft in einer Mischkammer zu erzeugen. Hierbei werden das Reduktionsmittel und die Luft

Über getrennte Leitungen der Mischkammer zugeführt. Während eines Dosiervorgangs kann es in der Mischkammer zu Druckschwankungen und Verwirbelungen kommen, die zu einem Rückströmen von Reduktionsmittel, beispielsweise wässriger Harnstofflösung, in die Druckluftleitung führen können. Während des Dosiervorgangs kann es ferner zu Schwankungen des Luftvolumenstroms kommen. Beispielsweise sinkt der Luftvolumenstrom mit steigender Reduktionsmittel-Einspritzmenge in die Mischkammer. Ein absinkender Volumenstrom wirkt sich jedoch negativ auf die Vermengung von Reduktionsmittel mit Luft, sowie auf den Transport des Reduktionsmittels bis zu einer Einsprühung in einen Abgastrakt aus. Bei der Verwendung einer Harnstoff-Wasser-Lösung kann es ferner zu einem unerwünschten Auskristallisieren von Harnstoff im Leitungssystem kommen.

Die EP 0337073 beschreibt ein Verfahren zur nichtkatalytischen Entstickung eines Rauchgasstroms mit einer in Strömungsrichtung konisch sich verengenden Luftzufuhrleitung.

Aufgabe der Erfindung ist die Verbesserung einer Reduktionsmittel-Luft-Gemischaufbereitung dahingehend, dass Schwankungen im Luftvolumenstrom keine negativen Auswirkungen auf ein erzeugtes **Reduktionsmittel-Luft-Gemisch** haben.

Diese Aufgabe wird gelöst durch eine Vorrichtung mit den Merkmalen des Patentanspruchs 1 sowie ein Verfahren mit den Merkmalen des Patentanspruchs 9.

Durch die erfindungsgemäße Maßnahme, die das Reduktionsmittel beaufschlagende Luft mit einer überkritischen Druckdifferenz bzw. Schallgeschwindigkeit durch den Luftzufuhrkanal zu leiten, kann die in eine Mischkammer einströmende Luftmenge in bestimmten Druckbereichen unabhängig von einem in dem Mischraum

Herrschenden Druck konstant gehalten werden, insofern die auftretende Druckdifferenz größer ist als die für die vorliegende Bedingungen (Temperatur usw.) geltende kritische Druckdifferenz der Drossel. Durch die hohe Strömungsgeschwindigkeit wird auch ein Auskristallisieren beispielsweise von Harnstoff vermindert bzw. in einem stabilen Zustand gehalten. Als besonders vorteilhaft erweist sich, dass ein unerwünschtes Zurückströmen von Reduktionsmittel in den Luftzufuhrkanal wirksam unterbunden wird. Ferner wirkt der mit hoher Geschwindigkeit strömende Luftstrahl als Spray und sorft für eine effektive Beaufschlagung des Reduktionsmittels und insbesondere für eine sehr gleichmäßige Wandfilmbildung.

Zur Gewährleistung der erfindungsgemäßen Maßnahme, dass die Luft mit Schallgeschwindigkeit durch den Luftzufuhrkanal strömt, ist dieser derart ausgeführt, dass die an dem Luftzufuhrkanal anliegende Druckdifferenz überkritisch ist.

Der Reduktionsmittel-Zufuhrkanal ist als in einer Mischkammergehäusebohrung angeordnete Düse und der Luft-Zufuhrkanal als die Düse konzentrisch umgebender Ringspalt zwischen Düse und Wandung der Mischkammergehäusebohrung ausgebildet. Diese konzentrische Ausbildung von Luftzufuhr und Reduktionsmittelzufuhr ist klein bauend und erweist sich in der Praxis als robust und zuverlässig.

Hierbei ist ein in den Mischraum mündender Endabschnitt des Ringspaltes in Strömungsrichtung der Luft sich erweiternd ausgebildet. Diese Maßnahme führt in dem Endabschnitt des Ringspaltes zu einer Verzögerung der einströmenden Luft, welche sich günstig auf die Mischung der Luft mit dem Reduktionsmittel auswirkt. Durch eine derartige Erweiterung des Endabschnitts können Turbulenzen bei der Reduktionsmittel-Luft-Vermengung vermindert werden und das Auskristallisieren verhindert werden.

Vorteilhafte Ausgestaltungen der erfindungsgemäßen Vorrichtung bzw. des erfindungsgemäßen Verfahrens sind Gegenstand der Unteransprüche.

Es ist bevorzugt, dass der Endabschnitt sich gleichmäßig unter Einschluss eines Mischraum/Düsenwinkels zwischen Wandung und Düse von 10° bis 30° erweiternd ausgebildet ist. Eine derartige Dimensionierung gewährleistet besonders geringe Turbulenzen.

Gemäß einer bevorzugten Ausgestaltung der erfindungsgemäßen Vorrichtung weist diese Halterungsmittel zur Halterung der Düse in der Mischkammergehäusebohrung auf. Mit derartigen Halterungsmitteln ist eine genaue Positionierung der Düse innerhalb der Mischkammergehäusebohrung erzielbar.

Zweckmäßigerweise weisen die Halterungsmittel Zentriemoppen auf, mittel derer ein Zentrieren der Düse in der Mischkammerbohrung in einfacher Weise realisierbar ist.

Gemäß einer weiteren bevorzugten Ausgestaltung der Halterungsmittel weisen diese Stützstege auf. Durch diese Maßnahme ist die Ringspaltdüse in voneinander getrennte Düsenfelder zwischen den jeweiligen Stützstegen unterteilbar. Hierdurch ist eine besonders gute Führung des Luftstrahls und gleichzeitig eine genaue Zentrierung der Reduktionsmitteldüse erzielbar.

Gemäß einer bevorzugten Ausführungsform der Stützstege sind diese strahl- bzw. schraubenlinienförmig ausgebildet. Hierdurch kann der strömenden Luft eine Drallbewegung aufgezwungen werden. Ein so erzeugter Luftdrall verbessert die Vermengung der Luft mit dem Reduktionsmittel.

Gemäß einer weiteren bevorzugten Ausführungsform der erfindungsgemäßen Vorrichtung weist der Luftzufuhrkanal wenigstens eine im Gehäuse einer den Reduktionsmittelzufuhrkanal enthaltenden Düsenwandung ausgebildete Bohrung auf. Eine derartige Bohrung ist in einfacher Weise dimensionierbar, so daß eine gewünschte Druckbeaufschlagung zur Gewährleistung der Schallgeschwindigkeit der strömenden Luft erzielbar ist.

Zweckmäßigerweise ist die wenigstens eine Bohrung wenigstens teilweise strahl- bzw. schraubenlinienförmig ausgebildet. Mittels dieser Maßnahme ist die bereits erwähnte Beaufschlagung der strömenden Luft mit einem Drall erzielbar.

Die Erfindung wird nun unter Bezugnahme auf die einzelnen Figuren beschrieben. Es zeigt:
- Figur 1: eine blockschaltbildartige Ansicht eines Harnstoff-Dosiersystems, bei welchem die erfindungsgemäße Vorrichtung bzw. das erfindungsgemäße Verfahren vorteilhaft einsetzbar sind.
- Figur 2: eine seitliche Schnittansicht einer bevorzugten Ausführungsform der erfindungsgemäßen Vorrichtung,
- Figur 3: eine vergrößerte Ansicht des in Figur 2 mittels eines Kreises markierten Bereiches;
- Figur 4: eine Schnittansicht entlang der Linie A-A der Figur 3,
- Figur 5: eine der Figur 4 entsprechende Schnittansicht einer weiteren bevorzugten Ausführungsform der erfindungsgemäßen Vorrichtung.
- Figur 6: eine perspektivische Ansicht der Vorrichtung gemäß Figur 5,
- Figur 7a: eine der Figur 6 entsprechende perspektivische Ansicht einer weiteren bevorzugten Ausführungsform der erfindungsgemäßen Vorrichtung,
- Figur 7b: eine der Figur 4 oder 5 entsprechende Schnittansicht der Ausführungsform der Figur 7a,
- Figur 7c: eine weitere Ansicht der Ausführungsform gemäß Figur 7a,
- Figur 8a: eine der Figur 4 oder 5 entsprechende Schnittansicht einer weiteren bevorzugten Ausführungsform der erfindungsgemäßen Vorrichtung, und
Figur 8b eine perspektivische Ansicht der Vorrichtung gemäß Figur 8, und
Figur 8c eine weitere Ansicht der Ausführungsform der Figuren 8a, 8b entlang der Schnittlinie A'A der Figur 8a.

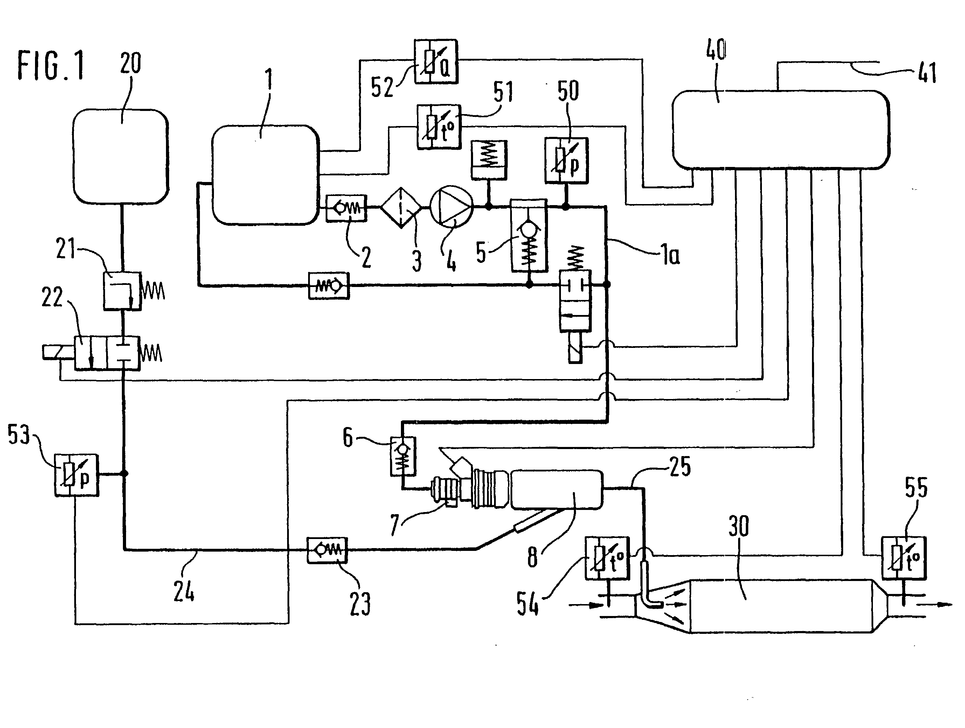

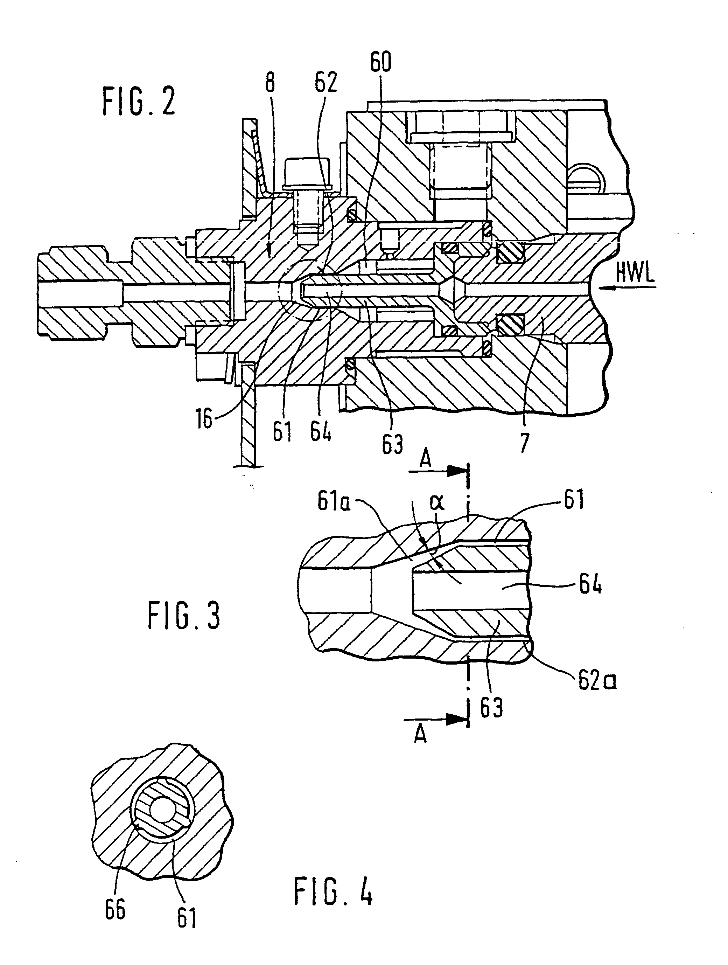

In Figur 1 ist mit 1 ein Harnstofftank bezeichnet, aus welchem Harnstoff-Wasser-Lösung über eine Leitung 1a mit einem Rückschlagventil 2 und einem als Filtersieb ausgeführten Filter 3 von einer Förderpumpe 4 angesaugt und über ein weiteres Rückschlagventil 6 zu einem Dosierventil 7 einer Mischkammer 8 gefördert wird. Das Dosierventil 7 dosiert die erforderliche Menge an Harnstoff-Wasser-Lösung in einen Mischraum bzw. Diffusor, welcher in den Figuren 2 und 3 mit 16 bezeichnet ist. Eine eventuell auftretende Überstrommenge der Harnstoff-Wasser-Menge ist über einen Druckregler 5 in den Harnstofftank 1 zurückführbar.

Mit 20 ist ferner ein Druckluftbehälter bezeichnet, aus welchem Druckluft über eine Druckluftleitung 24 mit einem Druckbegrenzer 21, einem 2/2-Wegeventil 22 und einem Rückschlagventil 23 in die Mischkammer 8 einbringbar ist. Durch Vorsehen des Rückschlagventils 23 kann ein Rückströmen eines Reduktionsmittel-Luft-Gemisches aus der Mischkammer in die Druckluftleitung 24 verhindert werden.

In der Mischkammer 8 wird unter Beaufschlagung der Harnstoff-Wasser-Lösung mittels der Druckluft ein Aerosol erzeugt, welches über eine Aerosolleitung 25 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandssensoren 50 bis 55, deren Funktionsweise an sich bekannt ist und hier nicht weiter erläutert wird. Das Steuergerät 40 berechnet aus diesen Informationen eine Harnstoff-Dosiermenge, welche einem den Katalysator 30 durchströmenden Abgas zugegeben werden soll.

Unter Bezugnahme auf die Figuren 2 und 3 wird nun eine erste bevorzugte Ausführungsform der erfindungsgemäßen Vorrichtung, welche einen Teil der Mischkammer 8 bildet, beschrieben.

Die über die Druckluftleitung 24 in die Mischkammer eingebrachte Druckluft tritt über einen Ringraum 60 in einen Ringspalt 61 ein, welcher zwischen der Wandung 62a einer Mischkammerbohrung 62 und einer in dieser konzentrisch angeordneten Düse 63 definiert ist. Die Düse 63 ist mittig mit einer Bohrung 64 ausgebildet, über welche Harnstoff-Wasser-Lösung in den Mischraum 16 einspritzbar ist. Ferner wird die den Ringspalt 61 durchströmende Luft in den Mischraum 16 eingebracht. In dem Ringraum 60 herrscht ein Luftdruck P₁, in dem Mischraum 16 ein Luftdruck P₂. Erfindungsgemäß sind der Ringspalt 41 und der Mischraum 16 derart dimensioniert bzw. ist das Luftzufuhrsystem 20, 21, 22, 23, 24 derart ausgebildet, daß die Luft den Ringspalt 61 mit Schallgeschwindigkeit durchströmt, d. h. die Druckdifferenz ΔP=P₁-P₂ ist überkritisch. Beispielhaft sei angegeben, daß bei einer Druckdifferenz ΔP von größer als 1,5 bar eine Querschnittsfläche von etwa 0,6 mm² für den Ringspalt 61 gewählt werden kann. Bei derartigen Strömungsverhältnissen ist der aus dem Ringspalt 61 austretende Luftstrom durch den vorgegebenen Spaltquerschnitt definiert. In bestimmten Druckbereichen kann somit unabhängig vom Eingangsdruck, d. h. dem in dem Mischraum 16 herrschenden Druck P₂, die den Ringspalt 61 durchströmende Luftmenge konstant gehalten werden. Durch die hohe Strömungsgeschwindigkeit wird ferner ein Auskristallisieren von Harnstoff vermindert bzw. in einem stabilen Zustand gehalten. Das Zurückströmen von Harnstoff-Wasser-Lösung durch den Ringspalt in die Luftseite des Systems wird ebenfalls wirksam unterbunden.

Insbesondere in Figur 3 ist erkennbar, daß der Ringspalt 61 mit einem gleichmäßig sich erweiternden Endabschnitt 61a ausgebildet ist. Man erkennt einen zwischen der Wandung 62 und der Düse 63 ausgebildeten Winkel α, welcher vorzugsweise 10° bis 30° beträgt. Durch eine entsprechende Wahl dieses sogenannten Diffusor/Düsen-Winkels kann die Turbulenz bei der Harnstoff-Wasser-Lösung/Luftvermengung verringert werden und das Auskristallisieren von Harnstoff vermindert werden.

Zur exakten konzentrischen Anordnung der Düse 63 bezüglich der Mischkammerbohrungswandung 62 kann die Düse 63 mit Zentriernoppen 66 ausgebildet sein, wie in der Schnittansicht der Figur 4 veranschaulicht.

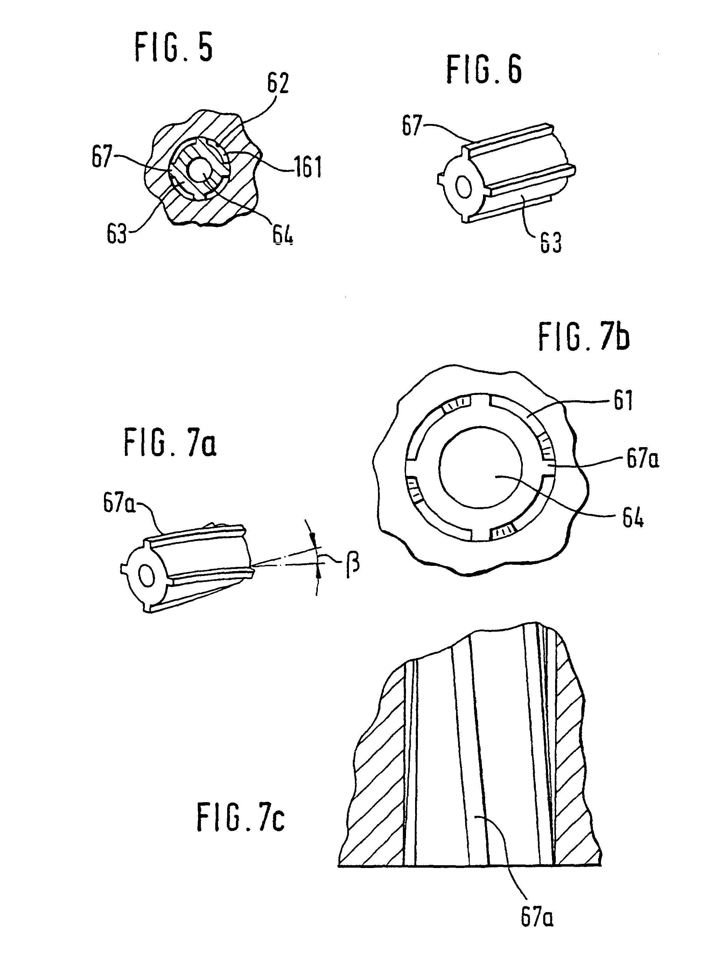

In den Figuren 5 und 6 ist eine weitere bevorzugte Ausführungsform der erfindungsgemäßen Vorrichtung dargestellt. Man erkennt, daß hier die als Halterungsmittel dienenden Zentriernoppen durch Stützstege 67 ersetzt sind. Diese Stützstege sind einstückig mit der Wandung der Düse 63 verbunden. Die Düse 63 stützt sich hierbei mittels der Stützstege 67 in der Mischkammerbohrung 62 ab. Der Ringspalt wird somit in einzelne Düsenfelder 161 zwischen den einzelnen Stegen unterteilt. Durch diese Maßnahme ist es möglich, den Luftstrahl in günstiger Weise zu führen und gleichzeitig eine genaue Zentrierung der Düse 63 zu gewährleisten. Die Stützstege können auch strahlförmig bzw. schraubenlinienförmig auf dem Gehäuse der Düse 63 angeordnet sein, wie dies in Figur 7a anschaulich dargestellt ist , Die dort mit 67a bezeichneten Stützstege weisen gegenüber der Längsrichtung der Düse einen mit β bezeichneten Winkel auf. Durch diese Maßnahme kann der strömenden Luft eine Drallbewegung aufgezwungen werden, wodurch die Vermengung der Luft mit Harnstoff-Wasser-Lösung günstig beeinflußbar ist. Eine der Figur 5 entsprechende Ansicht dieser Ausführungsform ist in Figur 7b dargestellt. Es sei angemerkt, daß die Stützstege 67a als verschraubte Stege ausgebildet sein können. Eine weitere Ansicht dieser Ausführungsform ist in Figur 7b dargestellt (Draufsicht). Man erkennt hier besonders gut den schrägen Verlauf der Stützstege 67a bezüglich der im wesentlichen rohrförmigen Erstreckung der Düse.

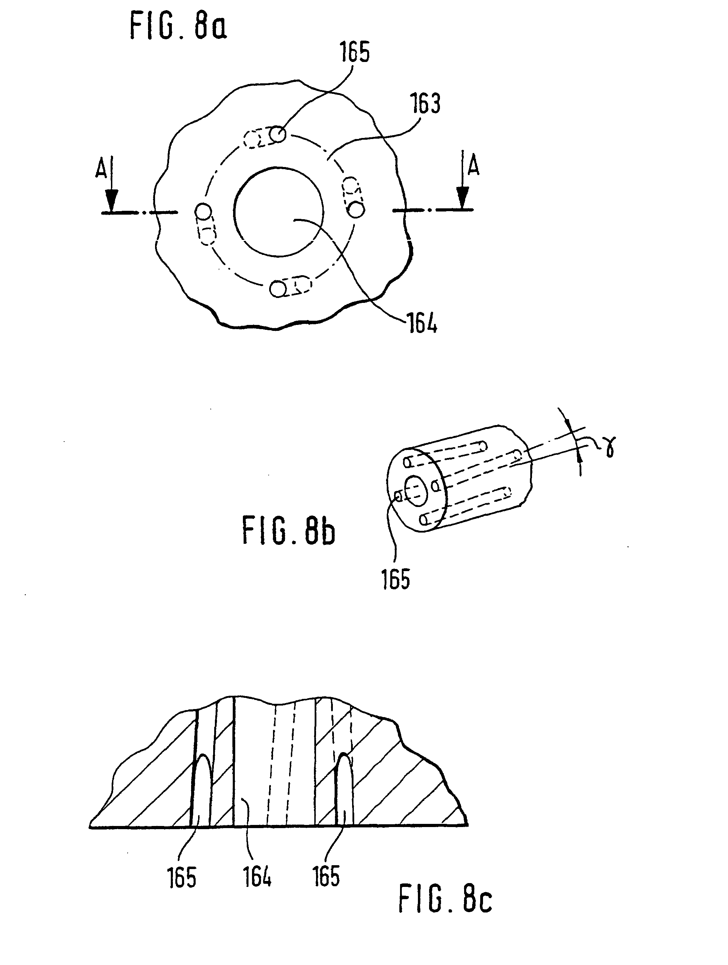

Unter Bezugnahme auf die Figuren 8a, 8b und 8c wird schließlich eine weitere bevorzugte Ausführungsform der erfindungsgemäßen Vorrichtung dargestellt. Hier ist eine mit einem zentralen Harnstoff-Wasser-Lösungszulauf 164 ausgebildete Düse insgesamt mit 163 bezeichnet. Anstelle eines Ringspaltes, wie er bei den bisher beschriebenen Ausführungsformen vorgesehen war, wird die Luft über Bohrungen 165, welche den Zulauf 164 konzentrisch umgebend in dem Gehäuse der Düse vorgesehen sind, in einen Mischraum eingeführt. Auch bei dieser Ausführungsform können die Luftleitungen 165 bezüglich der Haupterstreckungsrichtung der Düse bzw. der Richtung des Harnstoff-Wasser-Lösungszulauf 164 einen Winkel aufweisen, welcher in Figur 8b schematisch mit γ bezeichnet ist. Durch diese Maßnahme ist es ebenfalls möglich, eine Drallbewegung der strömenden Luft zu schaffen. Durch die Maßnahme, die Luft über derartige Bohrungen 165 in den Mischraum zu leiten, ist es ebenfalls in einfacher Weise möglich, einen mit schallgeschwindigkeit strömenden Luftstrom zur Verfügung zu stellen. Der Durchmesser der Bohrungen 165 ist hierbei so gewählt, daß bei überkritischer Druckdifferenz eine Strömung der Luft mit Schallgeschwindigkeit herbeigeführt werden kann.

## Patentansprüche

1. Vorrichtung zur Erzeugung eines Reduktionsmittel-Luft-Gemisches zur Entstickung von Abgasen, mit einem Mischraum (16), in welchem Reduktionsmittel über einen Reduktionsmittelzufuhrkanal (64, 164) und in welchem Luft über einen Luftzufuhrkanal (61, 165) einbringbar ist, wobei Mittel (20, 21, 22, 23, 24, 60, 61, 165) zur Druckbeaufschlagung der Luft vorgesehen sind, so dass die das Reduktionsmittel beaufschlagende Luft mit einer überkritischen Druckdifferenz durch den Luftzufuhrkanal geleitet und die in die Mischkammer einströmende Luftmenge in bestimmten Druckbereichen unabhängig von einem in dem Mischraum herrschenden Druck konstant gehalten werden kann, wobei der Reduktionsmittelzufuhrkanal (64, 164) als in einer Mischkammergehäusebohrung (62) angeordnete Düse (63) und der Luftzufuhrkanal als die Düse (63) konzentrisch umgebender Ringspalt (61) zwischen Düse und der Wandung (62a) der Mischkammergehäusebohrung (62) ausgebildet ist, **dadurch gekennzeichnet, dass** die Vorrichtung eingerichtet ist zur katalytischen Entstickung von Abgasen aus Brennkraftmaschinen, dass der Mischraum als ein von der die Abgase führenden Anordnung getrennter Raum ausgebildet ist, wobei das Reduktionsmittel-Luft-Gemisch von der Mischkammer aus über eine mit dem Mischraum verbundene Leitung (25) zu einem Katalysator (30) transportiert werden kann, und dass ein in den Mischraum (16) mündender Endabschnitt (61a) des Ringspaltes (61) in Strömungsrichtung der Luft sich erweiternd ausgebildet ist.

2. Vorrichtung nach Anspruch 1, **dadurch gekennzeichnet, daß** der Endabschnitt (61a) sich gleichmäßig unter Einschluß eines Mischraum/Düsenwinkels (α) zwischen Wandung und Düse von 10 Grad bis 30 Grad erweiternd ausgebilder ist.

3. Vorrichtung nach einem der Ansprüche 1 oder 2, **gekennzeichnet durch** Halterungsmittel zur Halterung der Düse in der Mischkammergehäusebohrung.

4. Vorrichtung nach Anspruch 3, **dadurch gekennzeichnet, daß** die Halterungsmittel Zentriernoppen (66) aufweisen.

5. Vorrichtung nach einem der Ansprüche 3 oder 4, **dadurch gekennzeichnet, daß** die Halterungsmittel Stützstege (67) aufweisen.

6. Vorrichtung nach Anspruch 5, **dadurch gekennzeichnet, daß** die Stützstege (67) strahl- bzw. achraubenlinienförmig ausgebildet sind.

7. Vorrichtung nach Anspruch 1, **dadurch gekennzeichnet, daß** der Luftzufuhrkanal wenigstens eine in einem Gehäuse einer den Reduktionsmittelzufuhrkanal (164) enthaltenden Düsenwandung ausgebildete Bohrung (165) aufweist.

8. vorrichtung nach Anspruch 7, **dadurch gekennzeichnet, daß** die wenigstens eine Bohrung (165) wenigstens teilweise strahl- bzw. schraubenlinienförmig ausgebildet ist.

9. Verfahren zur Erzeugung eines Reduktionsmittel-Luft-Gemisches zur Entstickung von Abgasen, bei dem ein Mischraum (16) verwendet wird, in welchem Reduktionsmittel über einen Reduktionsmittelzufuhrkanal (64, 164) und in welchem Luft über einen Luftzufuhrkanal (61, 165) eingebracht wird, wobei die Luft druckbeaufschlagt wird derart, dass die das Reduktionsmittel beaufschlagende Luft mit einer überkritischen Druckdifferenz durch den Luftzufuhrkanal geleitet und die in die Mischkammer einströmende Luftmenge in bestimmten Druckbereichen unabhängig von einem in dem Mischraum herrschenden Druck konstant gehalten werden kann, wobei der Reduktionsmittelzufuhrkanal (64, 164) als in einer Mischkammergehäusebohrung (62) angeordnete Düse (63) und der Luftzufuhrkanal als die Düse (63) konzentrisch umgebender Ringspalt (61) zwischen Düse und der Wandung (62a) der Mischkammergehäusebohrung (62) ausgebildet ist, **dadurch gekennzeichnet, dass** die Abgase einer Brennkraftmaschine entstickt werden, dass die Abgase katalytisch entstickt werden, dass der Mischraum als ein von der die Abgase führenden Anordnung getrennter Raum ausgebildet ist, wobei das Reduktionsmittel-Luft-Gemisch von der Mischkammer aus über eine mit dem Mischraum verbundene Leitung (25) zu einem Katalysator (30) transportiert werden kann, und daß ein in den Mischraum (16) mündender Endabschnitt (61a) des Ringspaltes (61) in Strömungsrichtung der Luft sich erweiternd ausgebildet ist.

## Claims

1. Device for producing a reducing agent/air mixture for deNOxing exhaust gases, having a mixing space (16), in which reducing agent can be introduced via a reducing-agent feed passage (64, 164) and in which air can be introduced via an air feed passage (61, 165), means (20, 21, 22, 23, 24, 60, 61, 165) for applying pressure to the air being provided, so that the air which acts on the reducing agent is passed through the air feed passage with a supercritical pressure difference and the quantity of air flowing into the mixing chamber can be kept constantly within defined pressure ranges irrespective of a pressure prevailing in the mixing space, the reducing-agent feed passage (64, 164) being designed as a nozzle (63) arranged in a mixing-chamber housing bore (62), and the air feed passage being designed as an annular gap (61), which concentrically surrounds the nozzle (63) between the nozzle and the wall (62a) of the mixing chamber housing bore (62), **characterized in that** the device is designed for the catalytic deNOxing of exhaust gases from internal combustion engines, **in that** the mixing space is designed as a space which is separated from the arrangement carrying exhaust gases, it being possible for the reducing agent/air mixture to be transported from the mixing chamber, via a line (25) connected to the mixing space, to a catalytic converter (30), and **in that** an end section (61a), which opens out into the mixing space (16), of the annular gap (61) is designed to widen in the direction of flow of the air.

2. Device according to Claim 1, **characterized in that** the end section (61a) is designed to widen uniformly, so as to include a mixing space/nozzle angle (α) between wall and nozzle of from 10 degrees to 30 degrees.

3. Device according to either of Claims 1 and 2, **characterized by** holding means for holding the nozzle in the mixing chamber housing bore.

4. Device according to Claim 3, **characterized in that** the holding means have centring lugs (66).

5. Device according to either of Claims 3 or 4, **characterized in that** the holding means have supporting webs (67).

6. Device according to Claim 5, **characterized in that** the supporting webs (67) are designed in jet or helical form.

7. Device according to Claim 1, **characterized in that** the air feed passage has at least one bore (165) formed in a housing of a nozzle wall which includes the reducing-agent feed passage (164).

8. Device according to Claim 7, **characterized in that** the at least one bore (165) is designed at least in part in jet or helical form.

9. Method for producing a reducing agent/air mixture for deNOxing exhaust gases, in which a mixing space (16) is used, in which reducing agent is introduced via a reducing-agent feed passage (64, 164) and in which air is introduced via an air feed passage (61, 165), pressure being applied to the air in such a manner that the air which acts on the reducing agent is passed through the air feed passage with a supercritical pressure difference, and the quantity of air flowing into the mixing chamber can be kept constantly within defined pressure ranges irrespective of a pressure prevailing in the mixing space, the reducing-agent feed passage (64, 164) being designed as a nozzle (63) arranged in a mixing-chamber housing bore (62), and the air feed passage being designed as an annular gap (61), which concentrically surrounds the nozzle (63) between the nozzle and the wall (62a) of the mixing chamber housing bore (62), **characterized in that** the exhaust gases from an internal combustion engine are deNOxed, **in that** the exhaust gases are catalytically deNOxed, **in that** the mixing space is designed as a space which is separate from the arrangement carrying the exhaust gases, it being possible for the reducing agent/air mixture to be transported from the mixing chamber, via a line (25) connected to the mixing space, to a catalytic converter (30), and **in that** an end section (61a), opening out into the mixing space (16), of the annular gap (61) is designed to widen in the direction of flow of the air.

## Revendications

1. Dispositif pour produire un mélange agent de réduction-air pour la dénitrification de gaz d'échappement, avec un espace de mélange (16), dans lequel un moyen de réduction est amené au travers d'un canal d'amenée de moyen de réduction (64, 164) et dans lequel l'air est amené au travers d'un canal d'amenée d'air (61, 165), dans lequel des moyens (20, 21, 22, 23, 24, 60, 61, 165) sont prévus pour la mise sous pression de l'air, de sorte que l'air sollicitant le moyen de réduction est dirigé au travers du canal d'amenée d'air avec une différence de pression sur-critique et la quantité d'air pénétrant dans la chambre de mélange peut être maintenue constante dans certains domaines de pression indépendamment d'une pression régnant dans l'espace de mélange, et dans lequel le canal d'amenée de moyen de réduction (64, 164) est conçu en tant que buse disposée (63) dans un alésage (62) du boîtier de la chambre de mélange et le canal d'amenée d'air est conçu en tant qu'intervalle annulaire (61) entourant concentriquement la buse (63) entre celle-ci et la paroi (62a) de l'alésage (62) du boîtier de la chambre de mélange,
**caractérisé en ce que**
le dispositif est agencé pour la dénitrification catalytique de gaz d'échappement de moteurs à combustion interne, et l'espace de mélange est conçu en tant qu'espace séparé du dispositif conduisant les gaz d'échappement, le mélange agent de réduction-air pouvant être transporté à partir de la chambre de mélange, au travers d'une conduite (25) reliée avec l'espace de mélange, à un catalyseur (30), et un segment d'extrémité (61a), débouchant dans l'espace de mélange (16), de l'intervalle annulaire (61) est conçu en s'élargissant dans la direction de l'écoulement de l'air.

2. Dispositif selon la revendication 1,
**caractérisé en ce que**
le segment d'extrémité (61a) est conçu en s'élargissant régulièrement, en formant un angle espace de mélange/buse (α) entre paroi et buse, de 10 degrés à 30 degrés.

3. Dispositif selon l'une des revendications 1 ou 2,
**caractérisé par**
des moyens de support pour le support de la buse dans l'alésage du boîtier de la chambre de mélange.

4. Dispositif selon la revendication 3,
**caractérisé en ce que**
les moyens de support présentent des bossages de centrage (66).

5. Dispositif selon l'une des revendications 3 ou 4,
**caractérisé en ce que**
les moyens de support présentent des nervures d'appui (67).

6. Dispositif selon la revendication 5,
**caractérisé en ce que**
les nervures d'appui (67) sont conçues de forme droite ou en hélice.

7. Dispositif selon la revendication 1,
**caractérisé en ce que**
le canal d'amenée d'air présente au moins un alésage (165) formé dans un boîtier d'une paroi de buse contenant le canal d'amenée de moyen de réduction (164).

8. Dispositif selon la revendication 7,
**caractérisé en ce qu'**
au moins un alésage (165) est conçu de forme droite ou en hélice.

9. Procédé pour produire un mélange agent de réduction-air pour la dénitrification de gaz d'échappement, dans lequel on utilise un espace de mélange (16), dans lequel un moyen de réduction est amené au travers d'un canal d'amenée de moyen de réduction (64, 164) et dans lequel l'air est amené au travers d'un canal d'amenée d'air (61, 165), dans lequel l'air est mis sous pression de manière à ce que l'air sollicitant le moyen de réduction soit dirigé au travers du canal d'amenée d'air avec une différence de pression sur-critique et la quantité d'air pénétrant dans la chambre de mélange peut être maintenue constante dans certains domaines de pression indépendamment d'une pression régnant dans l'espace de mélange, et dans lequel le canal d'amenée de moyen de réduction (64, 164) est conçu en tant que buse disposée (63) dans un alésage (62) du boîtier de la chambre de mélange et le canal d'amenée d'air est conçu en tant qu'intervalle annulaire (61) entourant concentriquement la buse (63) entre celle-ci et la paroi (62a) de l'alésage (62) du boîtier de la chambre de mélange,
**caractérisé en ce que**
les gaz d'échappement d'un moteur à combustion interne sont dénitrifiés, que les gaz d'échappement sont dénitrifiés de manière catalytique, que l'espace de mélange est conçu en tant qu'espace séparé du dispositif conduisant les gaz d'échappement, le mélange agent de réduction-air pouvant être transporté à partir de la chambre de mélange, au travers d'une conduite (25) reliée avec l'espace de mélange, vers un catalyseur (30), et qu'un segment d'extrémité (61a), débouchant dans l'espace de mélange (16), de l'intervalle annulaire (61) est conçu en s'élargissant dans la direction de l'écoulement de l'air.
